# FASCICULE DE BREVET EUROPEEN

(11) **EP 0 505 234 B1**
(45) Date de publication et mention de la délivrance du brevet: **10.01.1996**
(21) Numéro de dépôt: 92400614.1
(22) Date de dépôt: 10.03.1992
(51) Int. Cl.: H02J 7/16

(54) **Circuit de détection de l'état d'un interrupteur, notamment d'une clé de contact dans un régulateur de tension d'alternateur**
Schaltkreis zur Erkennung eines Schalterzustandes, namentlich eines Zündschlüssels in einem Spannungsregler eines Wechselstromgenerators
Detection circuit of a switch-state, especially of a contact key in an alternator-voltage regulator

(30) Priorité: 12.03.1991 FR 9102959
(43) Date de publication de la demande: 23.09.1992
(73) Titulaire: VALEO EQUIPEMENTS ELECTRIQUES MOTEUR, F-94000 Creteil (FR)
(72) Inventeur: Pierret, Jean-Marie, F-75012 Paris (FR); Canitrot, Didier, F-94100 Saint-Maur des Fosses (FR)
(74) Mandataire: Martin, Jean-Jacques

(56) Documents cités:
- EP-A- 0 110 775
- DE-A- 2 354 796
- US-A- 4 041 369
- US-A- 4 418 311

## Description

La présente invention concerne d'une façon générale les dispositifs régulateurs de la tension de charge d'une batterie par un alternateur.

Classiquement, un régulateur est mis en service par la clé de contact du véhicule. Avec un régulateur dit mono-fonction, le régulateur est relié à la clé de contact via une lampe témoin de défaut.

Dans des régulateurs plus sophistiqués, la circuiterie du régulateur est alimentée en permanence, mais doit passer d'un état de repos ou veille, de consommation réduite, à un état actif lorsqu'on détecte que la clé de contact est fermée.

Mais pour obtenir une compatibilité de câblage de ces régulateurs avec des régulateurs mono-fonction, il n'est pas possible de réaliser une liaison directe entre la clé de contact et le régulateur, ce qui impose de détecter la fermeture de la clé à travers la lampe témoin de défaut.

Pratiquement, le problème central d'une telle détection réside dans la discrimination qui doit être effectuée entre le cas où la clé est ouverte et la lampe éteinte, auquel cas la borne de la lampe côté régulateur est à la masse, et le cas où la clé est fermée mais où la lampe, à cause de l'existence d'un défaut, est allumée, auquel cas la borne de la lampe côté régulateur est à un potentiel fixé par la tension de déchet du transistor qui alimente ladite lampe. Et plus cette tension de déchet est faible, plus le potentiel de la borne de la lampe côté régulateur est voisin de la masse, ce qui rend difficile la discrimination entre les états ouvert et fermé de la clé.

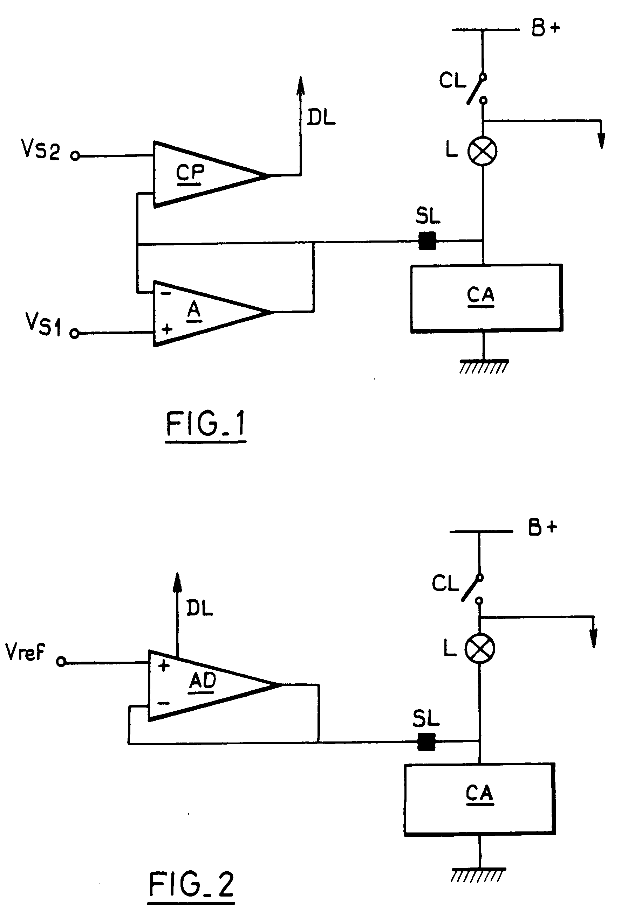

Certes une solution connue peut consister à accroître volontairement ladite tension de déchet pour faciliter la discrimination par comparaison avec un seuil de tension approprié, comme décrit ci-dessous en référence à la figure 1.

La lampe L est reliée d'un côté via l'interrupteur de clé CL à la tension B+. L'autre borne de la lampe est reliée d'une part à une ou plusieurs charges, de seconde part à l'entrée négative d'un amplificateur différentiel A, et de troisième part à une entrée d'un comparateur CP. L'entrée positive de A reçoit une tension de seuil VS1. par exemple de 0,9 volt. La seconde entrée de CP reçoit une tension de seuil VS2, inférieure à VS1 et par exemple de 0,7 volt.

La sortie de A est bouclée sur son entrée négative, tandis que la sortie de CP constitue le signal de détection de clé.

L'amplificateur A permet, lorsque l'interrupteur de clé est fermé, d'alimenter la lampe pour signaler un défaut.

L'amplificateur A a pour objet d'effectuer une régulation de la tension de déchet du transistor à la valeur de 0,9 volt. On garantit ainsi que, dans le cas où la lampe est allumée, la tension sur la borne SL soit toujours voisine de cette valeur.

Dans ces conditions, le comparateur CP peut effectuer une discrimination fiable entre la situation où SL est à la masse (clé ouverte) et la situation où la clé est fermée et la lampe allumée, auquel cas SL est à 0,9 volt, valeur supérieure au seuil de 0,7 volt.

Le circuit représenté sur la figure 1 correspond au préambule de la revendication 1.

Cependant, avec un tel circuit connu, un autre problème apparaît dans le cas où la tension à la borne de la lampe côté régulateur est prise comme tension d'alimentation pour des charges auxiliaires CA, comme illustré sur la figure 1, incluant par exemple des relais. Ainsi un accroissement de la tension de déchet risque d'amener de tels relais à rester collés lorsque la tension passe d'un niveau voisin de la tension de batterie B+ (clé fermée et lampe éteinte) à ladite valeur de tension de déchet (clé fermée et lampe allumée).

Ce circuit connu présente deux autres inconvénients majeurs. Tout d'abord, en nécessitant un amplificateur et un comparateur, il est complexe et coûteux. D'autre part, un tel circuit est sensible aux perturbations électriques agissant sur la régulation effectuée par l'amplificateur, qui sont détectées par le comparateur.

La présente invention vise à pallier ces inconvénients de la technique antérieure.

Elle concerne à cet effet un circuit de détection de l'état d'un interrupteur tel que défini dans la revendication 1.

Des aspects préférés de ce circuit sont définis dans les sous-revendications 2 à 4.

L'invention propose également un dispositif régulateur de la tension de charge d'une batterie par un alternateur incorporant un tel circuit de détection.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est un schéma de principe d'un circuit de discrimination de l'art antérieur,
la figure 2 est un schéma de principe d'un circuit de discrimination selon la présente invention,
la figure 2a est un schéma-bloc fonctionnel d'une partie du circuit de la figure 2, et
la figure 3 est un schéma détaillé d'une mise en oeuvre pratique du circuit de la figure 2a.

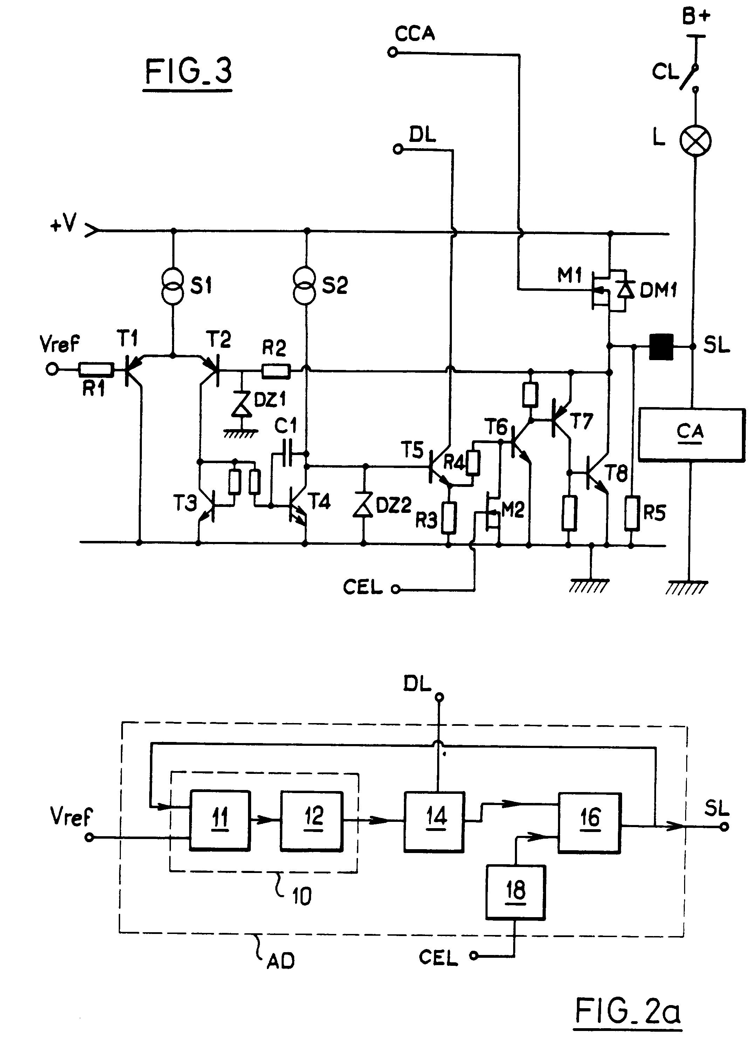

En référence tout d'abord à la figure 2, une clé de contact CL d'un véhicule automobile, représentée sous forme d'un interrupteur simple, est montée entre la borne positive de la batterie (tension B+) du véhicule et une première borne d'une lampe L de signalisation de défaut, prévue classiquement sur le tableau de bord du véhicule et associée à un dispositif comprenant un alternateur et un régulateur de la tension de charge de la batterie par l'alternateur.

La seconde borne de la lampe L est reliée à une borne de sortie de lampe SL du régulateur. Entre la lampe et la masse peuvent être prévues des charges auxiliaires CA. La ligne partant de la liaison entre la clé et la lampe est destinée à alimenter d'autres appareils ou dispositifs du véhicule lors de la fermeture de la clé.

La borne SL est reliée à l'entrée négative d'un amplificateur différentiel AD, dont la sortie est bouclée sur ladite entrée négative. A l'entrée positive de AD est appliquée une tension de référence Vref, par exemple de +0,7 volt.

L'amplificateur AD permet, lorsque l'interrupteur de clé est fermé et qu'il est rendu passant, d'alimenter la lampe pour signaler un défaut.

Par ailleurs, comme on le verra en détail plus loin, l'amplificateur AD est conçu selon l'invention pour délivrer sur une sortie DL un signal représentatif de l'état ouvert ou fermé de la clé CL, pour respectivement faire passer le régulateur de l'état de veille à l'état actif, selon la loi ci-dessous:
- si la tension sur SL est inférieure au seuil Vref, la sortie DL est inactive (par exemple à courant nul); c'est le cas lorsque CL est ouvert et que SL est à la masse;
- si la tension sur SL est supérieure au seuil Vref, la sortie DL est active (par exemple un courant est soutiré sur la borne DL); c'est le cas lorsque CL est fermé et que la lampe est éteinte, la tension sur SL étant alors B+;
- enfin si l'amplificateur AD effectue une régulation de la tension à la borne SL sur la tension de seuil Vref, alors là encore la sortie DL doit être active; c'est le cas lorsque CL est fermé et que la lampe est allumée.

En référence maintenant à la figure 2a, on a représenté sous forme de schéma-bloc fonctionnel un exemple de réalisation de l'amplificateur AD selon l'invention.

Il comprend un étage différentiel 10 comportant un étage d'entrée 11 qui reçoit sur l'une de ses bornes la tension de référence Vref. L'étage 10 comprend en outre un circuit de filtrage 12, dont la sortie est appliquée à l'entrée d'un circuit de détection 14, comportant la borne de détection DL. La sortie du circuit de détection est reliée à une première entrée d'un étage de puissance 16. L'étage de puissance est également commandé sur une seconde entrée par un moyen de commande 18 sensible à un signal externe CEL pour l'allumage/extinction de la lampe. Enfin la sortie de l'étage de puissance 16 est reliée d'une part à la borne SL et d'autre part à une autre entrée de l'étage différentiel 10 aux fins de régulation.

On va maintenant décrire en détail en référence à la figure 3 une réalisation pratique d'un circuit conforme aux principes de la figure 2.

L'entrée pour une tension de référence Vref, par exemple de 0,7 volts, est appliquée à la base d'un transistor PNP T1 via une résistance R1. Le collecteur de T1 est relié à la masse, tandis que son émetteur est relié à l'émetteur d'un transistor PNP T2. Les deux émetteurs sont reliés à une source de courant constant S1.

La base de T2 reçoit via une résistance R2 la tension présente au collecteur d'un transistor NPN T8 qui est le transistor de commande de la lampe L. La diode zéner DZ1 est une diode écrêteuse de protection.

T1 et T2 constituent l'étage d'entrée 11 de l'étage différentiel 10 construit autour de T1 à T4. Le collecteur de T2 est relié au circuit de filtrage 12, de type classique en soi et constitué par les transistors T3, T4, par la source de courant S2 et par un condensateur C1.

La sortie du circuit de filtrage attaque via un transistor T5, constituant le circuit de détection 14, un étage de puissance 16 constitué par les transistors T6 à T8. Plus précisément, le collecteur de T4 est reliée à la base de T5. Une diode zéner DZ2 de protection par écrêtage est prévue.

Le collecteur de T5 est relié à une borne de sortie du signal noté DL de détection de l'état de la clé de contact. L'émetteur de T5 est relié à une résistance d'émetteur R3 et à la base de T6 via une résistance R4. Entre la base de T6 et la masse est prévu un transistor MOS M2, constituant le moyen de commande 18 et dont la grille est reliée à une borne d'entrée de commande CEL de l'état de la lampe L.

Le collecteur de T8 est relié à une borne de sortie de lampe SL du circuit. La lampe L est montée entre ladite borne SL et la clé CL. Une charge auxiliaire CA est prévue entre la borne SL et la masse.

Un transistor MOS M1, entre le drain et la source duquel est prévue une diode DM1, reçoit sur sa grille à partir d'une borne CCA une commande de mise en/hors circuit de la charge auxiliaire CA.

Enfin une résistance R5 relie relie la borne SL à la masse.

Le fonctionnement du circuit décrit ci-dessus est le suivant:
a) lorsque la clé de contact CL est ouverte (position illustrée), la borne SL est amenée au potentiel de la masse via la ou les charges CA ou, en l'absence de charge, via R5. T2, T3 et T4 deviennent alors passants, ce qui bloque T5. La sortie DL ne délivre donc aucun courant, ce qui permet d'indiquer au reste du circuit régulateur (non représenté) que la clé est ouverte et qu'il doit donc être à l'état de veille.
b) lorsque la clé est fermée et qu'un défaut est constaté dans le régulateur (concrètement jusqu'à la mise en route du moteur), alors la borne d'entrée CEL reçoit un signal qui bloque M2. T6 à T8 sont passants et la lampe est alimentée. La tension à la borne SL est donc égale à la tension de déchet de T8. Dans ce cas, le circuit effectue une régulation de cette tension sur la valeur de la tension de référence Vref. L'état passant de T6 à T8 impose que T5 soit lui-même passant lorsque le circuit fonctionne en régulation, car T5 doit fournir le courant de base de T6. Plus précisément, l'émetteur de T5 est dans ce cas à une tension non nulle induite par la tension de jonction de T6, qui est à l'état passant. Un courant circule donc dans R3, à travers T5 et depuis la borne de détection DL. On signale donc sur DL le fait que la clé de contact est fermée, pour amener le régulateur à l'état actif.
c) lorsque la clé CL est fermée et qu'aucun défaut n'est plus constaté dans le régulateur, alors la borne d'entrée CEL reçoit un signal qui rend M2 passant. T6, T7 et T8 sont donc bloqués. Aucun courant ne peut traverser la lampe et la borne SL est au potentiel B+ à travers la lampe et la clé de contact. Il en résulte que T2, T3 et T4 sont bloqués et T5 est saturé. Un courant est donc là encore engendré au niveau de la sortie DL, pour signaler au régulateur que la clé reste fermée et donc pour maintenir le régulateur à l'état actif.

Ainsi, selon la présente invention, c'est par une articulation judicieuse de l'étage différentiel T1 à T4, de l'étage de puissance T6-T8 et du transistor T5, sensible à l'état de l'étage différentiel, que le circuit décrit est apte à engendrer les signaux de détection DL appropriés, et ceci d'une manière simplifiée par rapport à l'art antérieur notamment parce qu'une seule tension de référence est requise. Et l'utilisation d'une tension de référence unique permet de diminuer la tension de déchet du transistor alimentant la lampe. Par exemple, on peut effectuer la régulation sur environ 0,7 volt, à comparer à la valeur d'environ 0,9 volt utilisée dans l'art antérieur. On minimise ainsi le risque que des relais utilisés pour alimenter les charges auxiliaires soient maintenus collés de façon indésirable dans cette situation.

On notera en outre que, dans le circuit décrit ci-dessus, si la liaison avec la borne de sortie positive de l'alternateur (tension +V) est coupée, le régulateur reste alimenté sous une tension faible, par exemple de l'ordre de 3 volts, par l'intermédiaire de la lampe et de la diode DM1, ce qui entraîne l'allumage de la lampe pour une signalisation du défaut correspondant.

On observera pour terminer que le circuit de discrimination décrit se prête tout particulièrement à une intégration dans un dispositif régulateur constitué par une puce unique de silicium.

Bien entendu, la présente invention n'est nullement limitée à la forme de réalisation décrite ci-dessus et représentée sur les dessins, mais l'homme de l'art saura y apporter toute variante ou modification dans le cadre des revendications annexées.

## Revendications

1. Circuit de détection de l'état d'un interrupteur, notamment de l'état d'une clé de contact (CL) pour amener à l'état actif un dispositif régulateur de la tension de charge d'une batterie par un alternateur, dans lequel une première borne de l'interrupteur (CL) est reliée à une source de courant continu (B+) et une seconde borne de l'interrupteur est reliée au dispositif régulateur par l'intermédiaire d'une charge (L) telle qu'une lampe témoin, la mise en/hors circuit de ladite charge étant réalisée par un composant (T8) ayant une tension de déchet entre deux bornes de sortie, ce composant étant commandé par un moyen amplificateur (AD) recevant sur une première borne une première tension de référence (Vref) et sur une seconde borne la tension présente sur une borne (SL) de la charge à l'opposé de l'interrupteur (CL), borne à laquelle est reliée une borne de sortie commandée du composant (T8), et conçu pour réguler la tension de déchet sur la valeur de la première tension de référence lorsque l'interrupteur (CL) et le composant (T8) sont fermés, et incluant un moyen (T5) pour engendrer sur une sortie de détection (DL) de l'état de l'interrupteur un premier signal lorsque ladite tension présente sur la borne (SL) est inférieure à une seconde tension de référence (Vref) et pour engendrer sur ladite sortie de détection un second signal à chaque fois que ladite tension présente sur la borne (SL) est supérieure à la seconde tension de référence (Vref) ou que ledit moyen amplificateur est en cours de régulation, les premier et second signaux indiquant que l'interrupteur est ouvert respectivement fermé,
caractérisé en ce que les première et seconde tensions de référence sont identiques, en ce que le moyen (T5) pour engendrer des signaux sur ladite sortie de détection (DL) est constitué par un circuit de détection (14) interposé entre un étage d'entrée (11) du moyen amplificateur (AD) et ledit composant (T8) de mise en/hors-circuit de ladite charge, ledit circuit de détection étant commandé en conduction lorsque ledit composant (T8) est commandé en conduction par ledit moyen amplificateur.

2. Circuit selon la revendication 1, caractérisé en ce que le moyen amplificateur (AD) comprend:
un étage différentiel (10; T1-T4) recevant sur une première borne la tension de référence (Vref) et sur une seconde borne la tension présente sur la borne (SL) de la charge,
un étage de puissance (16; T6-T8) incluant ledit composant (T8) et relié à la sortie dudit étage différentiel en vue de la régulation de la tension de déchet,
le circuit de détection (14; T5) étant interposé entre l'étage différentiel et l'étage de puissance et commandé en conduction par la sortie dudit étage différentiel, la sortie de détection (DL) étant prise sur ledit circuit de détection, et
un moyen de commande (18; M2) dudit étage de puissance à partir d'un signal de mise en/hors circuit de la charge.

3. Circuit selon la revendication 2, caractérisé en ce que le circuit de détection (14) comprend un transistor (T5) dont la base est reliée à la sortie de l'étage différentiel (T1-T4) et dont l'émetteur est relié d'une part à un potentiel de masse via une première résistance (R3) et d'autre part à la base d'un premier transistor (T6) de l'étage de puissance via une seconde résistance (R4) .

4. Circuit selon la revendication 2 ou 3, caractérisé en ce que le moyen de commande (18) dudit étage de puissance (16) comprend un moyen interrupteur à semi-conducteur (M2) prévu entre la base dudit premier transistor (T6) de l'étage de puissance et le potentiel de masse.

5. Dispositif régulateur de la tension de charge d'une batterie par un alternateur caractérisé en ce qu'il comprend un circuit de détection selon l'une des revendications précédentes.

## Patentansprüche

1. Schaltung zur Erfassung des Zustands eines Schalters, insbesondere des Zustands eines Zündschlüssels (CL), um eine Reglervorrichtung für die Ladespannung zum Laden einer Batterie durch einen Wechselstromgenerator in den aktiven Zustand zu schalten, in welcher ein erster Anschluß des Schalters (CL) mit einer Gleichstromquelle (B+) verbunden ist und ein zweiter Anschluß des Schalters mit der Reglervorrichtung über einen Verbraucher (L), etwa eine Kontrolleuchte, verbunden ist, wobei die Ein-/Ausschaltung des besagten Verbrauchers durch ein Bauteil (T8), erfolgt, das eine Restspannung zwischen zwei Ausgangsanschlüssen hat, wobei dieses Bauteil durch ein Verstärkermittel (AD) gesteuert wird, das an einem ersten Anschluß eine erste Bezugsspannung (Vref) und an einem zweiten Anschluß die Spannung am Anschluß (SL) des zum Schalter (CL) entgegengesetzten Verbrauchers erhält, wobei mit diesem Anschluß ein gesteuerter Ausgangsanschluß des Bauteils (T8) verbunden ist, und das für die Regelung der Restspannung nach dem Wert der ersten Bezugsspannung ausgelegt ist, wenn der Schalter (CL) und das Bauteil (T8) geschlossen sind, und das ein Mittel (T5) enthält, um an einem Erfassungsausgang (DL) zur Erfassung des Zustands des Schalters ein erstes Signal zu erzeugen, wenn die am Anschluß (SL) anstehende Spannung kleiner als eine zweite Bezugsspannung (Vref) ist, und um an dem besagten Erfassungsausgang (DL) ein zweites Signal zu erzeugen, wenn die am Anschluß (SL) anstehende Spannung größer als eine zweite Bezugsspannung (Vref) ist oder wenn das besagte Verstärkermittel im Regelbetrieb arbeitet, wobei das erste und zweite Signal anzeigen, daß der Schalter geöffnet bzw. geschlossen ist , **dadurch** **gekennzeichnet** , daß die erste und zweite Bezugsspannung identisch sind, daß das Mittel (T5) zur Erzeugung von Signalen an dem besagten Erfassungsausgang (DL) aus einer Erfassungsschaltung (14) besteht, die zwischen einer Eingangsstufe (11) des Verstärkermittels (AD) und dem besagten Bauteil (T8) für das Ein-/Ausschalten des besagten Verbrauchers eingesetzt ist, wobei die besagte Erfassungsschaltung leitungsgesteuert wird, wenn das besagte Bauteil (T8) durch das besagte Verstärkermittel leitungsgesteuert wird.

2. Schaltung nach Anspruch 1 , **dadurch** **gekennzeichnet** , daß das Verstärkermittel die folgenden Bestandteile umfaßt:
eine Differentialstufe (10; T1-T4), die an einem ersten Anschluß die Bezugsspannung (Vref) und an einem zweiten Anschluß die am Anschluß (SL) des Verbrauchers anstehende Spannung erhält,
eine Leistungsstufe (16; T6-T8), die das besagte Bauteil (T8) einschließt und mit dem Ausgang der besagten Differentialstufe verbunden ist, um die Restspannung zu regeln,
die Erfassungsschaltung (14; T5), die zwischen der Differentialstufe und der Leistungsstufe eingesetzt ist und durch den Ausgang der besagten Differentialstufe leitungsgesteuert wird, wobei der Erfassungsausgang (DL) an der besagten Erfassungsschaltung entnommen wird, und
ein Steuermittel (18; M2) für die Steuerung der besagten Leistungsstufe ausgehend von einem Signal für die Ein-/Ausschaltung des Verbrauchers.

3. Schaltung nach Anspruch 2 , **dadurch** **gekennzeichnet** , daß die Erfassungsschaltung (14) einen Transistor (T5) umfaßt, dessen Basis mit dem Ausgang der Differentialstufe (T1-T4) verbunden ist und deren Emitter einerseits über einen ersten Widerstand (R3) mit einem Massepotential und andererseits über einen zweiten Widerstand (R4) mit der Basis eines ersten Transistors (T6) der Leistungsstufe verbunden ist.

4. Schaltung nach Anspruch 2 oder 3 , **dadurch** **gekennzeichnet** , daß das Steuermittel (18) der besagten Leistungsstufe (16) ein Halbleiter-Schaltermittel (M2) umfaßt, das zwischen der Basis des besagten ersten Transistors (T6) der Leistungsstufe und dem Massepotential vorgesehen ist.

5. Reglervorrichtung für die Ladespannung zum Laden einer Batterie durch einen Wechselstromgenerator, **dadurch gekennzeichnet** , daß sie eine Erfassungsschaltung nach einem der vorangehenden Ansprüche umfaßt.

## Claims

1. A circuit for detecting the state of a switch, in particular the state of a key contact (CL) for activating a regulator circuit for regulating the voltage at which a battery is charged by an alternator, in which a first terminal of the key switch (CL) is connected to a DC source (B+) and a second terminal of the key switch is connected to the regulator circuit via a load (L) such as a warning lamp, said load being switched ON and OFF by means of a component (T8) having a voltage drop between two output terminals, said component being controlled by amplifier means (AD) receiving a first reference voltage (Vref) on a first terminal, and on a second terminal the voltage present on a terminal (SL) of the load opposite from its terminal connected to the key switch (CL), which terminal is connected to a controlled output terminal of the component (T8), the amplifier means being designed to regulate the voltage drop to the value of the first reference voltage so long as the key switch (CL) and the component having the voltage drop (T8) are conductive, and including means (T5) for generating a first signal on a key switch state detection output (DL) whenever said voltage present on the terminal (SL) is less than a second reference voltage (Vref) and for generating a second signal on said detection output whenever said voltage present on the terminal (SL) is greater than the reference voltage (Vref) or whenever said amplifier means is regulating, the first and second signals respectively indicating that the key switch is open and closed, the detection circuit being characterized in that the first and second reference voltages are identical, and in that the means (T5) for generating signals on said detection output (DL) is constituted by a detection circuit (14) interposed between an input stage (11) of the amplifier means (AD) and said component (T8) for switching of said load ON and OFF, said detection circuit being controlled-to conduct when said component (T8) is controlled to conduct by said amplifier means.

2. A circuit according to claim 1, characterized in that the amplifier means (AD) comprises:
a differential stage (10; T1 to T4) receiving the reference voltage (Vref) on a first terminal and, on a second terminal, the voltage present on the said terminal (SL) of the load;
a power stage (16, T6 to T8) including said component having a voltage drop (T8) and connected to the output of said differential stage for the purpose of regulating the voltage drop;
the detector circuit (14; T5) being interposed between the differential stage and the power stage and controlled to conduct by the output of said differential stage, the detector output (DL) being taken from said detector circuit; and
control means (18; M2) for controlling said power stage from a signal for switching the load ON and OFF.

3. A circuit according to claim 2, characterized in that the detector circuit (14) comprises a transistor (T5) whose base is connected to the output of the differential stage (T1-T4) and whose emitter is connected firstly to ground potential via a first resistor (R3) and secondly to the base of a first transistor (T6) of the power stage via a second resistor (R4).

4. A circuit according to claim 2 or 3, characterized in that the control means (18) for said power stage (16) comprise semiconductor switch means (M2) disposed between the base of said first transistor (T6) of the power stage and ground potential.

5. A regulator for regulating the voltage at which a battery is charged by an alternator, the regulator being characterized in that it includes a detector circuit according to any preceding claim.
